# EUROPEAN PATENT APPLICATION

(11) **EP 4 610 124 A1**
(43) Date of publication of application: **03.09.2025**
(21) Application number: 24159852.3
(22) Date of filing: 27.02.2024
(51) Int. Cl.: B60T 17/00, F16L 55/033, F04C 29/06

(54) **SILENCER FITTING ELEMENT, SILENCER, PNEUMATIC COMPONENT, PNEUMATIC SYSTEM, COMMERCIAL VEHICLE, AND METHOD OF EXHAUSTING GAS**

(71) Applicant: ZF CV Systems Europe BV, 1170 Brüssel (BE)
(72) Inventor: OLSZEWSKI, Jakub, 50-513 Wroclaw (PL); ZELENT, Karol, 51-311 Kielczowek (PL); SEMENIUK, Maciej, 58506 Jelenia-Gora (PL); KOWAL, Marcin, 53-443 Wroclaw (PL)
(74) Representative: Schäferjohann, Volker

(57) **Abstract**

A silencer fitting element (10) for a silencer (50) of a pneumatic component or a pneumatic system for a vehicle comprises a baffle plate (20), a gas guiding structure (13) extending from the baffle plate (20) and configured to guide gas exiting several gas passages provided in the baffle plate (20), and a thread (35) for mounting the silencer fitting element (10). The gas guiding structure (13) is configured to guide the gas over a guiding distance (37, 47) from the second baffle plate surface (22), wherein the guiding distance (37, 47) is different for at least one first gas passage (25) of the several gas passages (25, 26) and at least one second gas passage (26) of the several gas passages (25, 26).

## Description

The invention relates to a silencer configured for installation on a vehicle, such as a commercial vehicle. The invention relates in particular to a silencer fitting element for mounting in a silencer for a pneumatic component or for a pneumatic system of a vehicle, such as a commercial vehicle.

Pneumatic systems are used on vehicles in a wide variety of applications, including gas supply systems, air dryer systems, pneumatic suspension, pneumatic levelling, and/or braking systems. Silencers are components of pneumatic systems that help reduce noise levels produced by the flow of compressed gas in these systems. Silencers are operative to attenuate or dampen the noise generated by expansion and release of compressed gas. Generally, the function of a silencer is to at least partially absorb and/or dissipate energy of the gas, converting the energy into heat instead of sound.

Silencers in pneumatic vehicle systems provide various benefits. The benefits include, without limitation, noise reduction, improved compliance with noise pollution regulations, improved working conditions for vehicle operators and/or passengers, and/or enhanced vehicle performance. For illustration, silencers help create a quieter working environment for vehicle operators, reducing the risk of hearing damage and improving overall working conditions. Silencers can also contribute to optimizing the overall performance of the pneumatic vehicle system by reducing pressure fluctuations. Overall, silencers in pneumatic vehicle systems help improve comfort, reduce noise pollution, and optimize the performance of pneumatic vehicle systems.

A silencer fitting element is a component configured to be used in a silencer. The silencer fitting element may be configured to modify the gas flow characteristics in the silencer when this is desired in a particular silencer application.

DE 10 2009 029968 A1, EP 2 303 659 B1, and DE 10 2008 029489 A1 disclose silencers. There is a continued need in the art for silencer components that are configured to provide efficient reduction in noise level during a gas exhaust operation. There is also a need for silencer components that can be installed efficiently.

Thus, there is a need for an enhanced silencer component configured to provide an efficient reduction in noise level during a gas exhaust operation while affording ease of installation.

The invention addresses the need for an improved silencer fitting element that provides an effective reduction in noise level during a gas exhaust operation while affording ease of installation, an improved silencer, a pneumatic component, a pneumatic system, and a vehicle comprising such a silencer fitting element.

According to aspects of the invention, a silencer fitting element, a silencer, a pneumatic component for a vehicle, a pneumatic system for a vehicle, a commercial vehicle, and a method of exhausting gas are provided. The dependent claims define embodiments.

According to an aspect, a silencer fitting element for a silencer of a pneumatic component or a pneumatic system for a vehicle. The silencer fitting element comprises a baffle plate extending transverse to a center axis of the silencer fitting element, the baffle plate comprising a first baffle plate surface, a second baffle plate surface, and several gas passages extending between the first baffle plate surface and the second baffle plate surface through the baffle plate. The silencer fitting element comprises a gas guiding structure extending from the baffle plate and configured to guide gas exiting the several gas passages over a guiding distance from the second baffle plate surface, wherein the gas guiding structure is configured such that the guiding distance is different for at least one first gas passage of the several gas passages and at least one second gas passage of the several gas passages. The silencer fitting element comprises a mounting structure for mounting the silencer fitting element, wherein the mounting structure comprises a thread.

Various effects are attained by the silencer fitting element. The gas guiding structure is operative to guide gas to different depths within a damping material (e.g., a mesh material) of the silencer in which the silencer fitting element is to be installed, depending on whether gas passes through the baffle plate through a passage closer to or further away from the center axis. The silencer fitting element is configured to be installed to a housing having a mating thread by means of threaded engagement, obviating the need for mounting components separate from the silencer fitting element for mounting the silencer fitting element. Thereby, ease of installation is attained upon installation of the silencer fitting element, while providing a structure that is operative to affect the gas flow in the silencer in a manner which allows effective noise reduction to be attained.

The silencer fitting element may be configured as a unitary body (which may be formed, e.g., from a plastic material and/or by a molding operation), which unitary body comprises the baffle plate, the gas guiding structure, and the thread.

Thereby, ease of manufacture and ease of assembly are attained while providing a structure that is operative to affect the gas flow in the silencer in a manner which allows effective noise reduction to be attained.

The gas guiding structure may be configured such that the guiding distance for gas passing through the baffle plate in a central region around the center axis is greater than the guiding distance for gas passing through the baffle plate in an annular region radially outward of the central region.

Thereby, the silencer fitting element is configured to guide gas over a greater length into damping material (e.g., mesh material) of a silencer when the gas passes through a gas passage in a central region of the baffle plate, and to guide gas to a smaller length into the damping material when the gas passes through another gas passage in an outer region of the baffle plate.

The gas guiding structure may comprise an outer tubular portion and an inner tubular portion, wherein the outer tubular portion extends circumferentially around part of the inner tubular portion.

Thereby, a guide structure configuration is provided that is capable of guiding the gas over different lengths (which can be set by the extension of the tubular portions relative to the baffle plate), while affording ease of installation.

At least part of the thread may be arranged on a surface of the outer tubular portion.

Thereby, ease of assembly is attained by facilitating engagement with a mating thread for mounting the silencer fitting element, while providing a simple construction in which the thread is arranged on part of the gas guiding structure that contributed to effective noise reduction.

At least part of the thread may be arranged on an outer surface of the outer tubular portion.

Thereby, ease of assembly is attained by facilitating engagement with a mating inner thread for mounting the silencer fitting element, while providing a simple construction in which the thread is arranged on part of the gas guiding structure that contributed to effective noise reduction.

The thread may extend along the outer surface of the outer tubular portion from a first axial thread end to a second axial thread end, wherein the first axial thread end and the second axial thread end are arranged on opposite sides relative to an extension plane along which the second baffle plate surface extends.

Thereby, secure attachment of the silencer fitting component is attained while utilizing the space available on the outer tubular portion (that provides gas guiding over a smaller gas guiding distance) for providing the thread.

The inner tubular portion may extend by a first distance from the second baffle plate surface, the outer tubular portion may extend by a second distance from the second baffle plate surface, the first distance being greater than the second distance.

Thereby, the silencer fitting element is configured to guide gas over a greater length into damping material (e.g., mesh material) of a silencer when the gas passes through a gas passage in a central region of the baffle plate, and to guide gas to a smaller length into the damping material when the gas passes through another gas passage in an outer region of the baffle plate.

The silencer fitting element may be configured such that the first distance divided by the second distance is at least 1.05, at least 1.1, at least 1.15, or at least 1.18.

Thereby, the silencer fitting element is configured to guide gas over a length into the damping material that, for gas passing through a gas passage in the central region of the baffle plate, is selected such that efficient noise reduction is attained by making better use of the available volume of damping material.

The silencer fitting element may be configured such that one, several, or all of the following apply: the outer tubular portion has an inner surface which flares with increasing distance from the second baffle element surface; the inner tubular portion has a further inner surface which flares with increasing distance from the second baffle element surface; the inner tubular portion has a further outer surface which tapers with increasing distance from the second baffle element surface.

Thereby, the silencer fitting element is configured to guide gas such that efficient noise reduction is attained by enhanced use of the available volume damping material.

The gas guiding structure may be symmetric relative to at least one symmetry plane.

Thereby, the silencer fitting element is configured to guide gas such that efficient noise reduction is attained by enhanced use of the available volume damping material.

Alternatively or additionally, the gas guiding structure may be rotationally symmetric relative to the center axis.

Thereby, the silencer fitting element is configured to guide gas such that efficient noise reduction is attained by enhanced use of the available volume damping material, while facilitating threaded engagement of the silencer fitting element with a mating thread.

The several gas passages in the baffle plate may comprise one or several first gas passages arranged in a central (e.g., circular) region of the baffle plate and one or several second passages arranged in an outer (e.g., annular) region of the baffle plate. The gas guiding structure may be configured to provide radial confinement (i.e., confinement in a direction perpendicular to the center axis) over a first guiding distance for gas passing through the one or several first gas passages. The gas guiding structure may be configured to provide radial confinement (i.e., confinement in a direction perpendicular to the center axis) over a second guiding distance for gas passing through the one or several second gas passages, with the second guiding distance being less than the first guiding distance, with the guiding structure being configured to allow a gas flow radially outwardly beyond the outer tubular portion after the gas passing through the one or several second gas passages has reached the second guiding distance.

Thereby, the silencer fitting element is configured to guide gas over a length into the damping material that, for gas passing through a gas passage in the central region of the baffle plate, is selected such that efficient noise reduction is attained by making better use of the available volume of damping material.

The one or several first gas passages may respectively have an extension axis transverse (e.g., perpendicular) to an extension plane of the second baffle plate surface, e.g., parallel to the center axis. The one or several second gas passages may respectively have an extension axis transverse (e.g., perpendicular) to an extension plane of the second baffle plate surface, e.g., parallel to the center axis.

Thereby, gas impinging on the baffle plate with a gas flow direction generally along the center axis can be efficiently passed through the several passages.

The several first gas passages may be distributed circumferentially around the center axis. The several second gas passages may be distributed circumferentially around the center axis.

Thereby, the silencer fitting element is configured to efficiently distribute the gas flow throughout the damping material of the silencer, making enhanced use of the available volume of damping material.

A number of the several second gas passages may be greater than a number of the several first gas passages.

Thereby, the silencer fitting element is configured to provide a more even distribution of gas flow in the outer annular region of the baffle plate, making enhanced use of the available volume of damping material.

According to another aspect, there is provided a silencer for a pneumatic component for a vehicle or a pneumatic system for a vehicle. The silencer comprises the silencer fitting element of any aspect or embodiment; a housing comprising a further thread configured for threaded engagement with the thread of the silencer fitting element; and a damping material, wherein the silencer fitting element is configured to guide the gas passing through the several passages of the baffle plate into the damping material.

Thereby, a silencer is provided which comprises the silencer fitting element and, thus, attains efficient noise reduction while allowing the silencer fitting element to be mounted by threaded engagement, without requiring any mounting components separate from the housing and the silencer fitting. Noise pollution is reduced using a modular silencer construction in which the silencer fitting can be installed dependent on whether it is required for attaining a desired noise reduction level.

According to another aspect, there is provided a pneumatic component for a vehicle or a pneumatic system for a vehicle, comprising the silencer fitting element or the silencer according to an aspect or embodiment.

Thereby, the silencer fitting element can be used on the pneumatic component or the pneumatic system, providing efficient noise reduction while allowing the silencer fitting element to be mounted by threaded engagement.

The pneumatic component may comprises a pneumatic consumer port for fluidly connecting the pneumatic component to at least one consumer. The pneumatic component may comprises an exhaust port. The silencer fitting element is provided at the exhaust port.

Thereby, the silencer fitting element can be easily mounted for providing efficient noise reduction.

The pneumatic system for a vehicle may comprise any one or any combination of: a supply system for supplying compressed air; a levelling system; a suspension system; a braking system.

Thereby, efficient noise reduction is attainable using the silencer fitting element in any one or various pneumatic system.

According to another aspect, there is provided a commercial vehicle, comprising the silencer fitting element, the silencer, the pneumatic component or the pneumatic system according to an aspect or embodiment.

Thereby, a commercial vehicle is provided which utilizes the silencer fitting element and, thus, attains efficient noise reduction while allowing the silencer fitting element to be mounted by threaded engagement.

According to another aspect, there is provided a method of exhausting gas from a pneumatic component of a vehicle or from a pneumatic system of a vehicle. The method comprises exhausting the gas through a silencer. The silencer comprises a damping material and a silencer fitting element mounted by means of a threaded engagement of a thread of the silencer fitting element with a mating thread. The silencer fitting element comprises a baffle plate and a gas guiding structure extending from the baffle plate. The baffle plate comprises several gas passages extending through the baffle plate. Exhausting the gas comprises: guiding, by the gas guiding structure, the gas over a guiding distance into the damping material, wherein the guiding distance is different for at least one first gas passage and at least one second gas passage of the several gas passages.

Various effects are attained by the method of exhausting gas. The gas guiding structure is configured to guide gas to different depths within the damping material (e.g., a mesh material), depending on whether gas passes through the baffle plate through a passage closer to or further away from the center axis. The silencer fitting element is installed by means of threaded engagement, obviating the need for mounting components separate from the silencer fitting element for mounting the silencer fitting element. Thereby, ease of installation is attained upon installation of the silencer fitting element, while providing a structure that is operative to affect the gas flow in the silencer in a manner which allows effective noise reduction to be attained.

Optional features of the method and the effects attained thereby correspond to the optional features discussed in association with the silencer fitting element, the silencer, the pneumatic component, the pneumatic system, and/or the commercial vehicle.

The method may be performed by or using the silencer fitting element, the silencer, the pneumatic component, the pneumatic system, and/or the commercial vehicle.

According to another aspect of the invention, there is provided an assembly method of assembling a silencer of a pneumatic system for a vehicle. The assembly method comprises assembling the silencer fitting element according to an aspect or embodiment by threaded engagement of the thread with a mating thread.

Various effects are attained by the assembly method. The gas guiding structure is configured to guide gas to different depths within the damping material (e.g., a mesh material), depending on whether gas passes through the baffle plate through a passage closer to or further away from the center axis. The silencer fitting element is installed by means of threaded engagement, obviating the need for mounting components separate from the silencer fitting element for mounting the silencer fitting element.

According to another aspect of the invention, there is provided a use of the silencer fitting element, the silencer, the pneumatic component, the pneumatic system, the method of exhausting gas, and/or the assembly method to establish a gas flow in which gas is guided to different depths within a damping material by the gas guiding structure, depending on whether gas passes through the baffle plate through a passage closer to or further away from the center axis..

Thereby, reduced noise levels are attained using a silencer fitting element that can be selectively installed by threaded engagement, depending on whether the silencer fitting element is required to attain desired noise reduction levels.

Various effects and advantages are attained by the silencer fitting element, the silencer, the pneumatic component, and the systems and methods disclosed herein. For illustration, the gas guiding structure is configured to enable a volume of damping material to be used more thoroughly for silencing, while lending itself for use in a modular silencer configuration in which the silencer fitting element can be installed or omitted as the need arises.

Further embodiments and configurations are defined by the claims. These and other aspects of the invention will be apparent from and further explained with reference to the embodiments described herein with reference to the accompanying drawings, in which:
Fig. 1 is a cross-sectional view of a silencer fitting element according to an embodiment of the invention;
Fig. 2 is a side view of the silencer fitting element of Fig. 1 in a viewing direction perpendicular to a center axis of the silencer fitting element;
Fig. 3 is a plan view of the silencer fitting element of Fig. 1 in a viewing direction along the center axis towards a second baffle plate surface;
Fig. 4 is a plan view of the silencer fitting element of Fig. 1 in a viewing direction along the center axis towards a first baffle plate surface;
Fig. 5 is a cross-sectional view of a silencer comprising the silencer fitting element;
Fig. 6 is a cross-sectional view of the silencer showing a gas flow pattern,
Fig. 7 is a schematic representation of a pneumatic component for a vehicle comprising the silencer according to an embodiment;
Fig. 8 is a schematic representation of a pneumatic component for a vehicle comprising the silencer according to an embodiment;
Fig. 9 is a schematic representation of a pneumatic system for a vehicle configured as a gas supply system comprising the silencer according to an embodiment;
Fig. 10 is a schematic representation of a pneumatic system for a vehicle configured as a gas supply system comprising the silencer according to an embodiment;
Fig. 11 is a schematic representation of a pneumatic system for a vehicle configured as a gas supply system comprising the silencer according to an embodiment;
Fig. 12 is a schematic representation of a pneumatic system for a vehicle configured as a pneumatic or electropneumatic braking system comprising the silencer according to an embodiment;
Fig. 13 is a schematic representation of a pneumatic system for a vehicle configured as a levelling system comprising the silencer according to an embodiment;
Fig. 14 is a schematic representation of a pneumatic system for a vehicle configured as a gas spring system comprising the silencer according to an embodiment;
Fig. 15 is a schematic representation of a commercial vehicle;
Fig. 16 is a flow chart of a method of exhausting gas; and
Fig. 17 is a flow chart of an assembly method.

Embodiments of the invention will be described with reference to the drawings. In the drawings, similar or identical reference signs designate elements with similar or identical configuration and/or function.

The invention relates to a silencer fitting element and vehicle components comprising the silencer fitting element. The silencer fitting element is configured to be mounted by threaded engagement and provides a gas guiding function operative to guide gas, during an exhaust operation, to different locations of a damping material of a silencer.

As used herein, the term "silencer" refers to a component or assembly which is configured to mitigate noise levels as gas passes through the silencer. The silencer may in particular be configured to reduce noise levels as gas is being exhausted. The silencer may be configured to convert at least part of a kinetic energy of a gas flow into heat (e.g., of a damping material received in the silencer fitting element) to contribute to the noise reduction.

As used herein, the term "silencer fitting element" refers to an element configured to be mounted in a silencer to perform a gas guiding function. The silencer fitting element may be formed as a unitary body, e.g., as a unitary body comprising or formed of plastic material.

As used herein, the term "pneumatic" component encompasses an electropneumatic component, and the term "pneumatic" system encompasses an electropneumatic system.

As used herein, the term "exhaust" refers to discharging of gas from a pneumatic component or a pneumatic system to ambient atmosphere.

As used herein, the term "tubular" refers to a structure that extends circumferentially around an axis. The tubular structure may comprise cylindrical, frustoconical, or other surfaces. In particular, the term "tubular" is not limited to an elliptical or circular cylinder structure, but encompasses additional structures as long as they include a circumferentially extending wall, e.g., around an axis of the silencer fitting element.

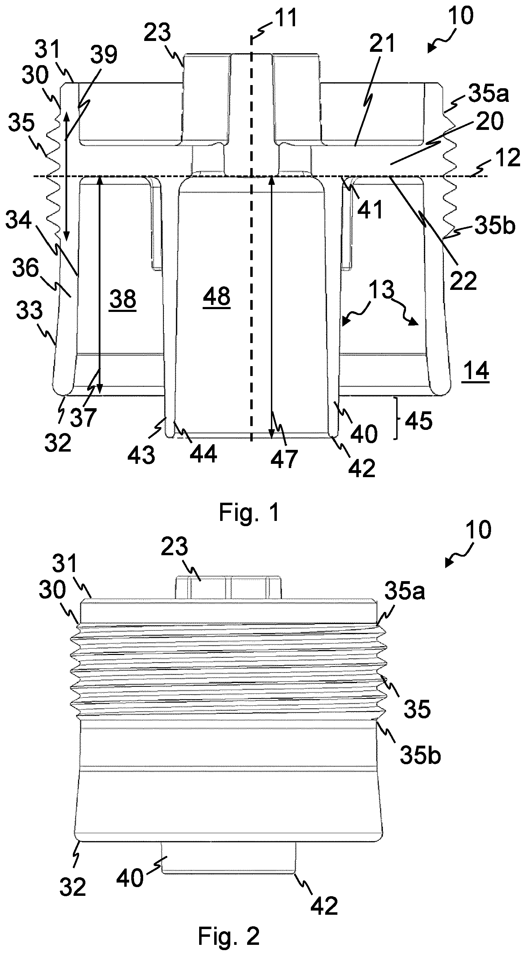

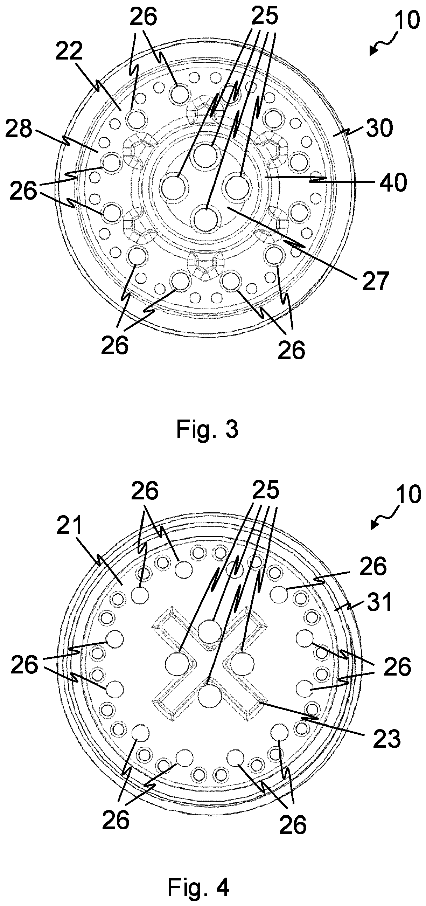

Fig. 1 is a cross-sectional view of a silencer fitting element 10 according to an embodiment of the invention. The silencer fitting element 10 has a center axis 11. The cross-sectional plane 14 in which the cross-sectional view of Fig. 1 is taken is disposed such that it extends along and includes the center axis 11. The silencer fitting element 10 comprises a baffle plate 20, an outer tubular portion 30, an inner tubular portion 40, and a mounting structure comprising a thread 35. A gas guiding structure 13 is provided by at least the inner tubular portion 40 and an inner surface 34 of a guide portion 36 of the outer tubular portion 30, which extends relative from the baffle plate 20 so as to circumferentially surround part of the inner tubular portion 40 while leaving an exposed part 45 of the inner tubular portion 40 exposed (as seen more clearly in the side view of Fig. 2). Additional features of the silencer fitting element 10 will be explained with reference to not only Fig. 1, but with additional reference to Fig. 2, Fig. 3, and Fig. 4, wherein Fig. 2 shows a plan view in a viewing direction perpendicular to the center axis 11, Fig. 3 shows a plan view along the center axis 11 with a viewing direction onto a second baffle plate surface 22, and Fig. 4 shows a plan view along the center axis 11 with a viewing direction onto a first baffle plate surface 21.

The baffle plate 20 has the first baffle plate surface 21 and the second baffle plate surface 22. The silencer fitting element 20 is configured such that, in an installed state, the first baffle plate surface 21 is configured to receive a gas flow that passes through a plurality of first gas passages 25 and a plurality of second gas passages 26 through the baffle plate 20. The silencer fitting element 20 is configured such that the inner tubular portion 40 and the outer guide portion 36 of the outer tubular portion 30 extend from the second baffle plate 20. The silencer fitting element 20 is configured such that, in an installed state, the inner tubular portion 40 and the outer gas portion 36 guides gas flowing through the plurality of first gas passages by confining this gas flow radially (i.e., in a direction transverse to the center axis 11). The silencer fitting element 20 is configured such that the plurality of first gas passages 25 supply gas to an inner gas guiding volume 48 that is surrounded by the inner tubular portion 40. The inner gas guiding volume may be cylindrical or frustoconical, without being limited thereto. The silencer fitting element 20 is configured such that the plurality of second gas passages 26 supply gas to an outer gas guiding volume 38 that is interposed between the inner tubular portion 40 and the outer tubular portion 30.

The second baffle plate surface 22 extends along an extension plane 12 that is transverse, e.g., perpendicular, to the center axis 11. The second baffle plate surface 22 may be substantially planar or may include planar portions extending in the extension plane 12. The first baffle plate surface 21 extends parallel to the extension plane 12, transverse (e.g., perpendicular) to the center axis 11. The first baffle plate surface 21 may optionally comprise a central structure, such as one or several projections 23 that may extend from the first baffle plate surface 21. The one or several projections 23 project from the baffle plate 20 in a direction opposite to an extension direction of the inner tubular portion 40. The one or several projections 23 may comprise a guide and/or support structure, e.g., for a bias member (such as a coil spring) or other silencer and/or valve part. The one or several projections 23 may define a cross- or x-shaped structure, with the plurality of first gas passages 25 being arranged between adjacent arms of the cross- or x-shaped structure. The outer tubular portion 30 extends between a first outer tubular portion end 31 and a second outer tubular portion end 32, which are arranged on opposite sides relative to the baffle plate. The first outer tubular portion end 31 may be arranged such that the outer tubular portion 30 circumferentially surrounds at least part of the one or several projections 23. The first outer tubular portion end 31 may be arranged such that the one or several projections extend beyond a first end plane in which the first outer tubular portion end 31 extends. The second outer tubular portion end 32 is spaced from the extension plane 12 of the second baffle plate surface 22 by the second guiding distance 37, such that the outer tubular portion 30 radially delimits an outward flow of gas while the gas flows through the outer gas guiding volume 38. The distance of the second outer tubular portion end 32 from the extension plane 12 (measured along the center axis 11 and perpendicular to the extension plane 12), which defines the second guiding distance 37, is less than the distance of a second inner tubular portion end 42 of the inner tubular portion 40 from the extension plane 12 (measured along the center axis 11 and perpendicular to the extension plane 12), which defines a first guiding distance 47. Thereby, the gas guiding structure 13 is configured to direct gas passing through passages in a center region 27 of the baffle plate 20 (i.e., through the plurality of first gas passages 25) deeper into a portion of a damping material (e.g., a mesh material) of a silencer than gas passing through passages in an outer region 28 of the baffle plate 20 (i.e., through the plurality of second gas passages 26). Thereby, portions of the damping material located in proximity to the second inner tubular end 11 receive a greater proportion of the gas flow than in silencer configurations in which the silencer fitting element 10 is omitted. This enhanced used of the available damping material volume provides improved gas flow and noise reduction characteristics.

As best seen in Fig. 3 and Fig. 4, the plurality of first gas passages 25 may be distributed around the center axis 11. The plurality of first gas passages 25 may be arranged at equal angular intervals around the center axis 11. Each of the plurality of first gas passages 25 may have a same diameter and a passage axis that is parallel to the center axis 11. The plurality of first gas passages 25 are arranged in the center region 27 of the baffle plate 20, having exit openings at the second baffle plate surface 22 that are surrounded by the inner tubular portion 40. The plurality of second gas passages 26 may be distributed around the center axis 11. The plurality of second gas passages 26 may be arranged at other equal angular intervals around the center axis 11. The other angular intervals by which the second gas passages 26 are angularly offset from each other may be less than the angular intervals by which the first gas passages 25 are angularly offset from each other. Each of the plurality of second gas passages 26 may have a same diameter and a passage axis that is parallel to the center axis 11. The plurality of second gas passages 26 are arranged in the outer region 28 of the baffle plate 20, having exit openings at the second baffle plate surface 22 that are interposed between the outer tubular portion 30 and the inner tubular portion 40.

The thread 35 allows the silencer fitting element 10 to be mounted by threaded engagement with a mating thread, without requiring any fastening elements separate from the thread 35 and the mating thread. The mating thread may be provided on a silencer housing component or another pneumatic component housing. For reasons of compact construction and secure attachment, the thread 35 may extend on an outer surface 33 of the outer tubular portion 30. A first axial end 35a of the thread 35 and a second axial end 35b of the thread 35 may be arranged on opposite sides relative to the extension plane 12 of the second baffle plate surface 22. The thread 35 may have an axial thread extension 39 that extends beyond the baffle plate 20 on either side of the baffle plate 20.

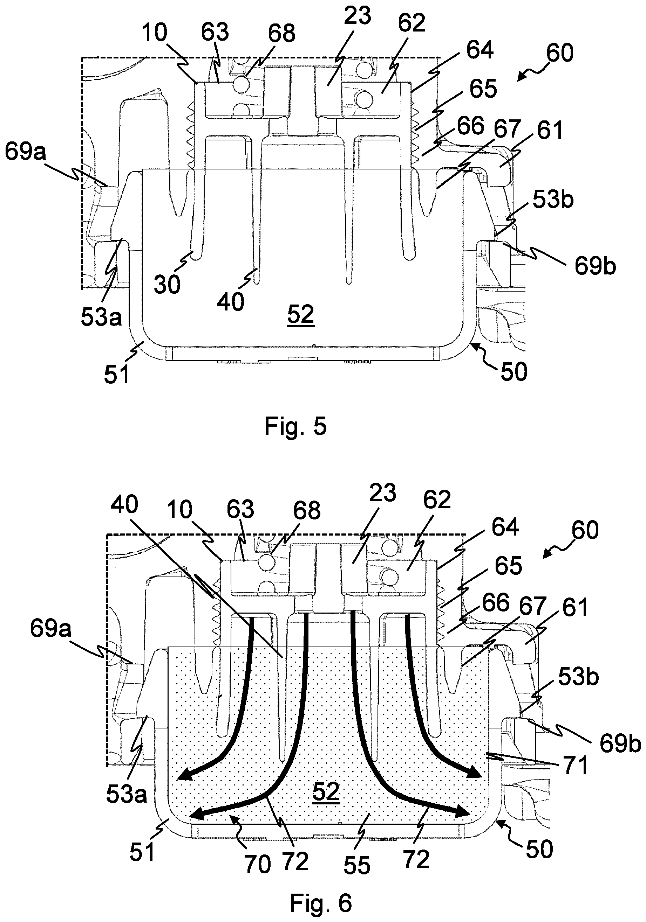

The outer tubular portion 30 may be configured such that the outer surface 33 and/or an inner surface 34 of the outer tubular portion 30 have a flaring shape, i.e., that the inner (and optionally outer) diameter of the outer tubular portion 30 increases with increasing distance from the extension plane 12. This increase may be present along at least part of the outer guide portion 36. The inner tubular portion 40 may be configured such that an outer surface 43 (i.e., the surface facing away from the center axis 11) of the inner tubular portion 40 has a tapering shape, i.e., that the outer diameter of the inner tubular portion 40 decreases with increasing distance from the extension plane 12. This decrease may be present along at least part of the inner tubular portion 40. The inner tubular portion 40 may be configured such that the inner surface 44 of the inner tubular portion 40 (i.e., the surface facing towards the center axis) has a flaring shape, i.e., that the inner diameter of the inner tubular portion 40 increases with increasing distance from the extension plane 12. This increase may be present along at least part of the inner tubular portion 40. Such a configuration provides the effect that both the outer gas guiding volume 38 and the inner gas guiding volume 48 have a radial width (measured perpendicular to the center axis 11) that increases as function of distance from the second plane 12. Thereby, radial confinement of the gas flow is gradually released, allowing the gas flow to change its direction towards gas outlet passages of a silencer lid (such as silencer lid 51 in Fig. 5, Fig. 6, Fig. 7, and Fig. 8) that may extend radially outwardly of the outer tubular portion 30.

The outer tubular portion 30 extends from the first outer tubular portion end 31 to the second outer tubular portion end 32. The outer tubular portion end 32 may be a circle or ellipse around the center axis 11, spaced from the extension plane 12 by the second guiding distance 37. The first outer tubular portion end 31 and the second outer tubular portion end 32 are disposed on opposite sides relative to the extension plane 12, and optionally such that the first outer tubular portion end 31 is offset so as to project from the first baffle plate surface 21. The inner tubular portion 40 extends from a first inner tubular portion end 41 at the second baffle plate surface 22 to the second inner tubular portion end 42, which is a free end of the inner tubular portion 40. The second inner tubular portion end 42 may be a circle or ellipse around the center axis 11, spaced from the extension plane 12 by the first guiding distance 47.

The silencer fitting element 10 is configured for threading engagement with a mating thread. This allows the silencer fitting element 10 to be screwed into position in a silencer, which may be a dedicated fluid circuit component or part of another pneumatic component.

Fig. 5 is a partial cross-sectional view of a pneumatic component 60 comprising a silencer. Fig. 6 shows the partial cross-sectional view including a damping material 55 (e.g., a mesh material 55) and an exemplary gas flow pattern 70. The pneumatic component 60 may comprise or may be a component of a gas supply system, e.g., an air control unit or another gas supply system that comprises an air dryer, without being limited thereto.

The pneumatic component 60 comprises a silencer 50. The silencer 50 comprises the silencer fitting element 10, a silencer lid 51 forming a receptacle 52, and the damping material 55 contained in the receptacle 52. The silencer 50 comprises an engagement structure comprising one or several engagement members 53a, 53b of the silencer lid 51 configured for force- and/or shape fitting engagement with one or several mating engagement members 69a, 69b of a housing 61 of the pneumatic component 60. The housing 61 comprises a recess 62 that accommodates part of the silencer fitting element 10 therein. The recess 62 may comprise a recess bottom surface 63 that is transverse (e.g., perpendicular) to the center axis 11 of the silencer fitting element 10. The recess 62 and the silencer fitting element 10 may be configured such that, in a fully threadingly engaged state, the first outer tubular portion end 31 abuts on the recess bottom surface 63, providing a stop for the threading engagement and mitigating the risk of inadvertent incorrect installation (e.g., by providing tactile feedback that the silencer fitting element 10 has been fully installed and by preventing inadvertent further rotation that could cause damage to the housing 60 and/or the silencer fitting element 10). The recess 62 comprises a recess side wall surface 64 of a side wall portion 66. A mating thread 65 configured for threaded engagement with the thread 35 is provided on the recess side wall surface 64. The housing 60 may optionally comprise at least one housing projection 67 operative to project into the receptacle 52 of the silencer lid 51.

The pneumatic component 60 may optionally comprise a member, such as a coil spring 68 or other member, which interacts with the one or several projections 23. For illustration, the one or several projections 23 of the silencer fitting element 10 may be operative to secure the member 68 of the pneumatic component against excessive displacement. The one or several projections 23 may project into the member 68 to mitigate or prevent movement of an end of the member 68. The member 68 may be a bias member (e.g., a coil spring) of a valve, a sensor, or another fluid circuit component.

As illustrated in Fig. 6, the gas directing structure formed on the inner tubular portion 40 and the outer tubular portion 30 is configured such that it guides gas to different depths within the damping material 55, depending on whether the gas is closer to the center axis 11 or further away from the center axis 11 of the silencer fitting element 10. This is illustrated by characteristic gas flow paths 71, 72 of a gas flow pattern 70. Thereby, the silencer 50 is configured to utilize the damping material disposed proximate the second inner tubular end 42 of the inner tubular portion 40 to a greater degree for noise reduction, as compared to a silencer in which the silencer fitting 10 is not present.

The silencer fitting element 10 is a component that can be installed in a silencer 50 depending on the desired degree of noise level reduction. Thus, the pneumatic component 60 may be operative such that it can operate both without the silencer fitting element 10 installed and with the silencer fitting element 10 installed. The silencer fitting element 10 can be installed if the silencer 50 is to be used on a part of a vehicle where noise reduction is more critical and/or if the silencer 50 is to be used in a geographic area in which there are even stricter regulatory requirements on noise levels than in other areas.

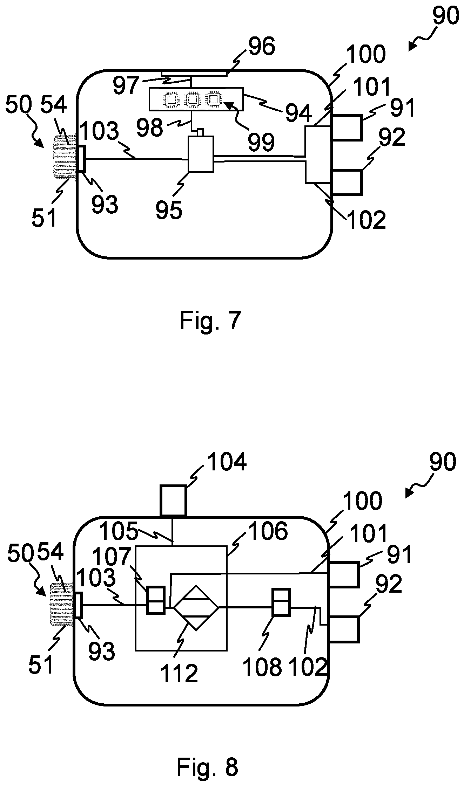

Fig. 7 shows a pneumatic component 90. The pneumatic component 90 is configured for use in a pneumatic system of a vehicle. The pneumatic component 90 comprises a component housing 100, at least one valve 95 arranged in the housing 100, and a plurality of ports provided on the housing 100 in direct or indirect fluid communication with a valve 95 of the pneumatic component 90. The plurality of ports comprise at least an exhaust port 93. The silencer fitting element 10 is configured for threaded attachment (e.g., a threaded attachment that can be released in a reversible, destruction-free manner) with the component housing 100 at the exhaust port 93, to provide a reduction of noise levels during an exhaust operation. The plurality of ports may comprise a supply port 91 configured to receive pressure gas provided by a gas supply system and/or a discharge port 92 configured for fluid communication (e.g., for bi-directional fluid communication) with at least one pneumatic consumer. The pneumatic component 90 may comprise a first fluid connection 101 that establishes (direct or indirect) fluid communication of the supply port 91 and a first port of the valve 95. The first fluid connection 101 may be directly connected to the supply port 91 and the first port of the valve 95. The pneumatic component 90 may comprise a second fluid connection 102 that establishes (direct or indirect) fluid communication of the discharge port 92 and a second port of the valve 95. The second fluid connection 102 may be directly connected to the discharge port 92 and the first port of the valve 95. The pneumatic component 90 may comprise a third fluid connection 103 that establishes (direct or indirect) fluid communication of the exhaust port 93 and a third port of the valve 95. The third fluid connection 103 may be directly connected to the exhaust port 93 and the third port of the valve 95. The first fluid connection 101, the second fluid connection 102, and the third fluid connection 103 may be integrated within the component housing 100.

As illustrated in Fig. 7, the silencer lid 51 of the silencer 50 comprises a plurality of gas outlet passages 54. The plurality of gas outlet passages 54 may be arranged such that gas passing through the silencer fitting element 50 and the damping material 55 exits the silencer 50 through the plurality of gas outlet passages 54. The plurality of gas outlet passages 54 may extend so as to overlap with the inner tubular section 40 and/or the outer tubular section 30 of the silencer fitting element 10.

The pneumatic component 90 may be configured as an electropneumatic component. The at least one valve 95 may comprise a solenoid valve or several solenoid valves. The pneumatic component 90 may comprise an electric interface 96. The electric interface 96 may be configured for being connected to a control unit, a vehicle bus, or at least one actuation element that can be operated by a vehicle operator. The pneumatic component 90 may comprise an electronics portion 94 that may be accommodated within the component housing 100 or a dedicated electronics housing attached to the component housing 100. The electronics portion 94 may be operative to selectively energize at least one solenoid valve, responsive to a signal or control data received at the electric interface 96. The electronics portion 94 may comprise one or several circuit(s) 99. The one or several circuit(s) may comprise any one, several, or any combination of: integrated circuits, integrated semiconductor circuits, processors, controllers, application specific integrated circuits (ASICs), field programmable gate arrays (FPGAs), without being limited thereto. The electronics portion 94 may be communicatively coupled with the electric interface 96 via at least one electric connection 97. The electronics portion 94 may be coupled with the solenoid valve(s) 95 via at least one further electric connection 98.

In the pneumatic component 90, the silencer 50 is configured such that the silencer fitting element 10 provides improvements with respect to ease of installation, gas flow, and noise level reduction, as previously explained.

Fig. 8 shows a pneumatic component 90. The pneumatic component 90 is configured for use in a pneumatic system of a vehicle. Elements and/or features that correspond, with respect to their construction and/or configuration, to elements and/or features described in association with Fig. 7 are designated with the same reference signs. The pneumatic component 90 may be configured as an air control unit comprising an air dryer and/or another component of gas supply system operative to provide compressed ambient air, after dehumidification, to one or several pneumatic consumers. The pneumatic component 90 comprises a pneumatic assembly 106 that comprises an air dryer 112. The air dryer 112 may be directly connected to the supply port 91 via the first fluid connection 101. The air dryer 112 may be connected to the discharge port 92 via at least one check valve 108, which is also referred to as outlet check valve in the art. The air dryer 112 may be connected, via a valve 107 (which may be an electrically or pneumatically controlled valve) to the exhaust port 93. The pneumatic component 90 may be operative to cause gas to be exhausted via the silencer 50 that comprises the silencer fitting element 10. Operation of the pneumatic component may be electrically and/or pneumatically controllable. For illustration, the pneumatic component 90 may comprise a control interface 104 operative to receive an electric or pneumatic input. The control interface 104 may comprise a control port. The control interface 104 may be connected to the pneumatic assembly 106 by a control connection 105. In the pneumatic component 90, which may be configured as an air control unit or other air provision unit, the silencer 50 is configured such that the silencer fitting element 10 provides improvements with respect to ease of installation, gas flow, and noise level reduction, as previously explained.

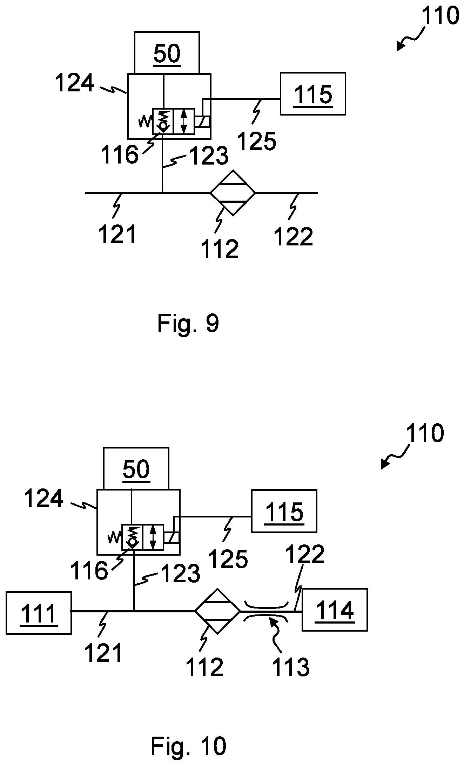

Fig. 9 shows a pneumatic system 110 for a vehicle. The pneumatic system 110 is configured as a gas supply system. The pneumatic system 110 comprises an air dryer 112. The pneumatic system 110 comprises a supply line 121 directly connected to the air dryer 112 to provide compressed gas to the air dryer 112 and/or transport gas towards at least one exhaust line 123 in an air dryer regeneration operation and/or other exhaust operation. The pneumatic system 110 comprises a pneumatic consumer line 122 directly connected to the air dryer 112 and configured to provide compressed gas to a pneumatic consumer system comprising at least one pneumatic consumer. The pneumatic consumer line 122 may be operative to provide gas from the pneumatic consumer system to the air dryer 112, e.g., to perform a regeneration operation. The pneumatic system 110 comprises the at least one exhaust line 123 operative to exhaust gas, via a silencer 50, to ambient atmosphere. The silencer 50 comprises the silencer fitting element 10 according to an embodiment, as disclosed herein. The silencer fitting element 10 may be threadingly engaged with a housing 124, such as a valve housing 124 of a control valve 116. The at least one exhaust line 123 comprises an exhaust line that is directly connected to the supply line 121 and to the control valve 116. The gas supply system 110 comprises control electronics 115, such as a control device, coupled to the control valve 116 by an electric connection 125. The control electronics 115 is operative to control the control valve 116 to selectively establish fluid communication between the supply line 121 and the silencer 50 to perform an exhaust operation and/or to selectively disconnect the silencer 50 from the supply line 121 to stop gas exhaust through the silencer 50.

Fig. 10 shows a pneumatic system 110 for a vehicle. The pneumatic system 110 is configured as a gas supply system. Components already discussed in association with Fig. 10 are designated with the same reference signs as in Fig. 9. The pneumatic system 110 further comprises a pressure gas source 111. The pressure gas source 111 may comprise a compressor and/or a pressure reservoir. The pressure gas source 111 may comprise an intake for ambient air and may be operative to compress the ambient air to provide pressure gas. The pressure gas source 111 may be connected directly or via at least one valve to the supply line 121. The pneumatic system 110 further comprises a pneumatic consumer system 114. The pneumatic consumer system 114 comprises at least one pneumatic consumer coupled, directly or via at least one fluid circuit component, to the pneumatic consumer line 122. The pneumatic consumer line 122 comprises at least one regeneration valve 113 operative to be activated to selectively perform a regeneration of a desiccant of the air dryer 112. When performing the regeneration, the gas passing from the pneumatic consumer system 114 through the gas dryer 112 may be exhausted via the silencer 50 connected to the at least one exhaust line 123.

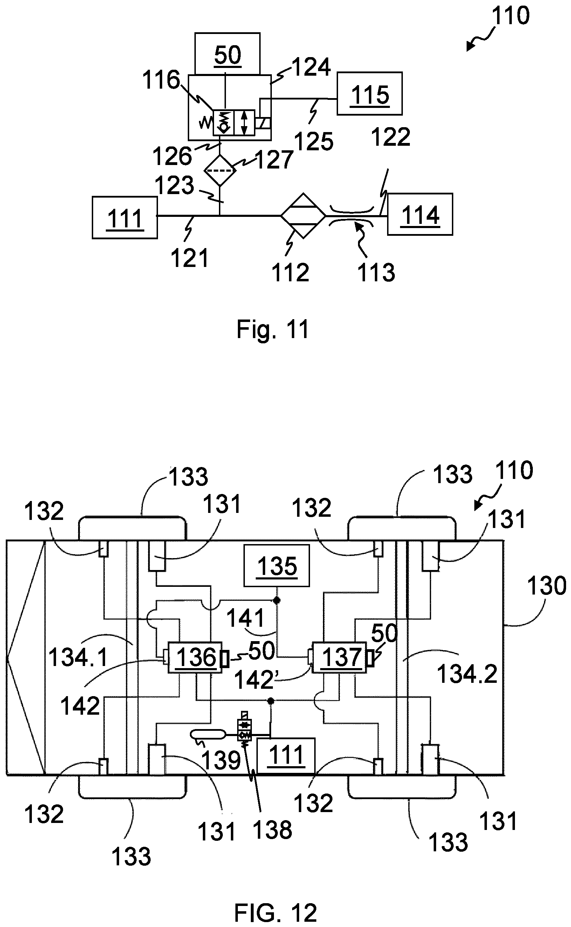

Fig. 11 shows a pneumatic system 110 for a vehicle. The pneumatic system 110 is configured as a gas supply system. Components already discussed in association with Fig. 9 and/or Fig. 19 are designated with the same reference signs as in Fig. 9 and/or Fig. 10. The pneumatic system 110 further comprises at least one filter 127. The exhaust line 123 is directly connected to a port of the filter 127. The pneumatic system 110 further comprises a filter connection line 126 directly connected to another port of the filter 127 and the control valve 116.

Fig. 12 shows a schematic representation of a vehicle 130 comprising a pneumatic system 110. The pneumatic vehicle system 110 may be configured as a braking system or electronic braking system (EBS). The pneumatic vehicle system 110 configured as a braking system comprises at least one pneumatic component, such as a front axle modulator 136 and/or a rear axle modulator 137, which comprises the silencer 50. The silencer 50 comprises the silencer fitting element 10 threadingly engaged with a housing of the modulator 136, 137. The vehicle 130 comprises a front axle 134.1 and a rear axle 134.2 or several rear axles. The vehicle 130 comprises several wheel 133. The vehicle 130 comprises one or several sensors, such as wheel speed sensors 132 associated with the several wheels 133. The pneumatic system 110 comprises several brake cylinders 131. The pneumatic system 110 comprises control electronics 135, such as a control unit 135, which is coupled to the front axle modulator 136 and the rear axle modulator 137 via at least one electric connection 141. The front axle modulator 136 comprises an electric interface 142 for communicatively interfacing with the control electronics 135. The rear axle modulator 137 comprises a further electric interface 142' for communicatively interfacing with the control electronics 135. The front axle modulator 136 has at least one discharge port in fluid communication with brake cylinders 131 for front axle wheels. The rear axle modulator 137 has at least one further discharge port in fluid communication with brake cylinders 131 for rear axle wheels. The pneumatic system 110 may comprise the fluid supply system of any one of Fig. 9, Fig. 10, and Fig. 11 to provide pressure gas to the modulators 136, 137. The pneumatic system 110 may comprise a supply system that comprises at least the compressor 111 and a pressure reservoir 138, with the pressure reservoir being connected to a supply line for the modulators and an outlet port of the compressor 111 via a control valve 138.

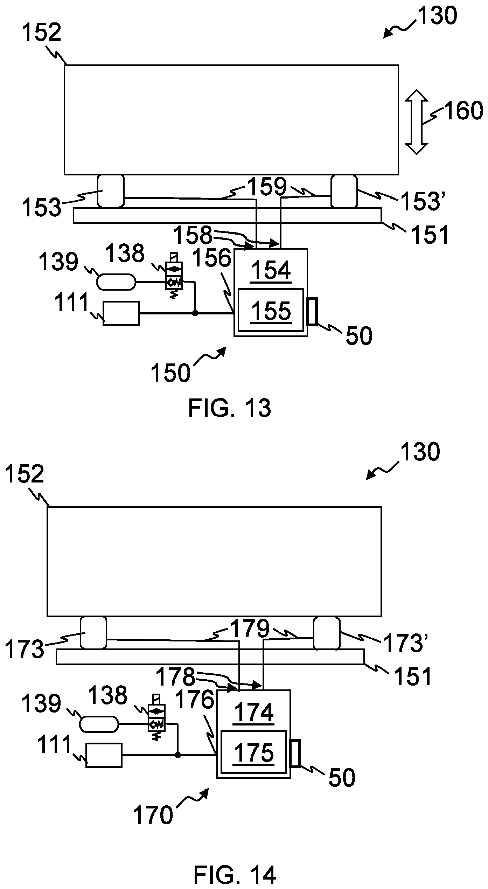

Fig. 13 is a schematic representation of a vehicle 130 which comprises a pneumatic vehicle system 150 configured as an electro-pneumatic cabin leveling system. The electro-pneumatic cabin leveling system 150 is configured to change an inclination of a cabin 152 of the vehicle 130 relative to a chassis 151. The pneumatic system 150 comprises at least a pneumatic adjustment element 153 and a further pneumatic adjustment element 153', each of which is configured to change the inclination of the cabin 152. The pneumatic adjustment element 153 and the further pneumatic adjustment element 153' can be configured as inflatable gas bags. The pneumatic system 150 comprises an electropneumatic control device 154. The electropneumatic control device 154 comprises at least two solenoid valves 155 (with the system of at least two solenoid valves being indicated merely schematically in Fig. 13). The electropneumatic control device 154 is arranged to selectively energize the at least two solenoid valves 155 such that compressed air received at a compressed gas inlet 156 is supplied to one or both of the pneumatic adjusting element 153 and the further pneumatic adjusting element 153' and/or that one or both of the pneumatic adjusting element 153 and the further pneumatic adjusting element 153' is vented via exhaust port of the electropneumatic control device 154. The silencer 50 is arranged at the exhaust port of the electropneumatic control device 154. The silencer 50 comprises the silencer fitting element 10. The silencer fitting element 10 may be threadingly engaged with a housing of the electropneumatic control device 154. The electropneumatic control device 154 comprises several consumer ports 158, each of which is connected to one of the pneumatic adjusting elements 153, 153' via a connecting line 159. The configuration of the pneumatic system 150 allows different parts of the cabin 152 to be adjusted along an adjustment path 160 in order to adjust the inclination and/or height so that the cabin 152 has a desired attitude relative to a gravity direction. For illustration, the pneumatic system 150 may be configured to allow the cabin 152 to be oriented with its floor perpendicular to a direction of gravity when the chassis 151 is inclined. The solenoid valves 155 can be actuated in a conventional manner, responsive to a mechanical linkage, signals or data received by the electropneumatic control device 154. The pneumatic system 150 may comprise a gas supply system as explained with reference to Fig. 9, Fig. 10, and Fig. 11. The pneumatic system 150 comprises at least a compressor 111 and a gas reservoir 139, with the gas reservoir 139 being connected to the electropneumatic control device 154 via at least one control valve 138.

Fig. 14 is a schematic representation of a vehicle 130 having a pneumatic system 170 configured as an electro-pneumatic shock absorber system. The pneumatic system 170 comprises at least a pneumatic shock absorber 173 and a further pneumatic shock absorber 173', which are each arranged between a chassis 151 and a cab 152. The pneumatic shock absorber 173 and the further pneumatic shock absorber 173' can be configured as gas bags whose pressure is adjustable. The pneumatic system 170 comprises an electropneumatic control device 174. The electropneumatic control device 174 comprises at least one solenoid valve or several solenoid valves 175 (which are shown merely schematically as a block in Fig. 14). The electropneumatic control device 174 is configured to selectively energize the at least one solenoid valve or the several solenoid valves 175 such that compressed gas received at a gas supply port is discharged to the pneumatic shock absorber 173 and the further pneumatic shock absorber 173' and/or that the pneumatic shock absorber 173 and the further pneumatic shock absorber 173' can be vented via an exhaust port of the electropneumatic control device 174. The silencer 50 is arranged at the exhaust port. The silencer 50 comprises the silencer fitting element 10. The silencer fitting element 10 may be threadingly engaged with a housing of the electropneumatic control device 174. The electropneumatic control device 174 comprises at least one consumer port 178, which is connected to the pneumatic shock absorber 173 and the further pneumatic shock absorber 173' via at least one connecting line 179. This configuration allows the pressure in the shock absorbers 173, 173' to be controlled using open-loop control and/or closed-loop control. The pneumatic system 170 may comprise a gas supply system as explained with reference to Fig. 9, Fig. 10, and Fig. 11. The pneumatic system 170 comprises at least a compressor 111 and a gas reservoir 139, with the gas reservoir 139 being connected to the electropneumatic control device 154 via at least one control valve 138. The solenoid valves 175 can be actuated in a conventional manner, responsive to signals or data received by the electropneumatic control device 174.

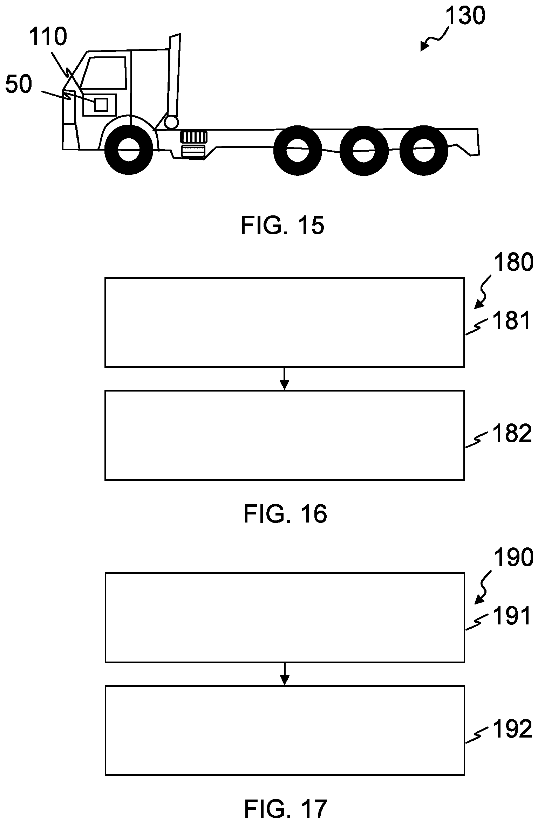

Fig. 15 shows a schematic representation of a vehicle 130 configured as a commercial vehicle. The commercial vehicle comprises at least one pneumatic system 110 comprising the silencer 50 and/or the silencer fitting element 10. The pneumatic system 110 may comprise any one or any combination of a supply system for supplying compressed air; a levelling system; a suspension system; a braking system.

Fig. 16 is a flow chart of a method 180 of exhausting gas from a pneumatic system 110, 150, 170 for a vehicle 130. The method 180 may be performed automatically by or using the pneumatic component 90 or the pneumatic system 110, 130, 150, 170 comprising at least one silencer fitting element 10 according to an embodiment.

The method 180 comprises a process block 181 of establishing, via at least one valve, fluid communication between at least one component of the pneumatic system and an exhaust port. The exhaust port is a port at which the silencer fitting element 10 is provided or with which the silencer 50 comprising the silencer fitting element 10 is connected.

The method 180 may further comprise a process block 182 of guiding, by the silencer fitting element 10, the gas flow into the damping material 55 of the silencer 50. Guiding the gas flow may comprise guiding the gas flow along guiding lengths into the damping material 55, which are different for gas passing through a first gas passage 25 closer to the center axis 11 of the silencer fitting element 10 than for gas passing through a second gas passage 26 further away from the center axis 11 of the silencer fitting element 10.

Fig. 17 is a flow chart of an assembly method 190 of assembling a silencer 50 of a pneumatic system 110, 150, 170 for a vehicle 130. The assembly method 190 may be performed automatically by or using an assembly system.

The method comprises a process block 191 of assembling the silencer fitting element 10, comprising threadingly engaging the thread 35 with a mating thread 65. The mating thread 65 may be provided at the recess 62 of the housing 60 of the pneumatic component 90.

The assembly method 190 comprises a process block 192 of engaging a silencer lid 51 with a damping material 55 disposed in a receptacle 52 of the silencer lid 51 such that the gas directing structure 13 of the silencer fitting element 10 projects into the receptacle 52.

The method 190 may further comprise assembling the silencer 50 or pneumatic component 90 in a pneumatic system 110, 150, 170, comprising establishing a direct or indirect pneumatic connection between the silencer 50 or the pneumatic component 90 and at least one of a pressure source 111 and/or a pneumatic consumer system 114.

While embodiments have been described with reference to the drawings, modifications and alterations may be implemented in other embodiments.

For illustration, while embodiments have been described in which the first gas passages 25 and/or the second gas passages 26 are distributed with equal angular spacing therebetween around the center axis 11, other arrangements of the first gas passages 25 and/or the second gas passages 26 may be implemented. For further illustration, while the first gas passages 25 and/or the second gas passages 26 may be cylindrical passages having a passage axis parallel to the center axis 11, one, several, or all of the first and/or second gas passages 25, 26 may be arranged in an angled manner, as desired for the gas flow pattern in the silencer 50. For still further illustration, while the outer guide portion 36 and/or surfaces of the inner tubular portion 40 may have flaring or tapering shapes, other configurations may be implemented.

The invention may be applied to a variety of pneumatic vehicle systems, including gas supply systems operative to perform an air dryer regeneration, without being limited thereto.

Various effects and advantages are attained by embodiments of the invention. Embodiments provide improved gas flow and noise reduction characteristics while affording ease of installation of the silencer fitting element. This facilitates compliance with regulatory noise pollution requirements, enhances vehicle operator safety and/or comfort, and improves passenger comfort.

### List of Reference Numerals (part of the description)

- 10: silencer fitting element
- 11: center axis
- 12: plane
- 13: guiding structure
- 14: cross-sectional plane
- 20: baffle plate
- 21: first baffle plate surface
- 22: second baffle plate surface
- 23: projection
- 25: first gas passage
- 26: second gas passage
- 27: central region
- 28: annular outer region
- 30: outer tubular portion
- 31: first outer tubular portion end
- 32: second outer tubular portion end
- 33: outer surface of outer tubular portion
- 34: inner surface of outer tubular portion
- 35: external thread
- 35a: first axial end of thread
- 35b: second axial end of thread
- 36: outer guide portion
- 37: second guiding distance
- 38: outer gas guiding volume
- 39: axial thread extension
- 40: inner tubular portion
- 41: first inner tubular portion end
- 42: second inner tubular portion end
- 43: outer surface of inner tubular portion
- 44: inner surface of inner tubular portion
- 45: exposed part of inner tubular portion
- 47: first guiding distance
- 48: inner gas guiding volume
- 50: silencer
- 51: silencer lid
- 52: receptacle
- 53a, 53b: engagement member
- 54: gas outlet passage
- 55: damping material (e.g., mesh material)
- 60: pneumatic component
- 61: housing
- 62: recess
- 63: recess bottom surface
- 64: recess side wall surface
- 65: mating thread
- 66: side wall portion
- 67: housing projection
- 68: bias member
- 69a, 69b: mating engagement member
- 70: gas flow
- 71: radially outer gas flow
- 72: radially inner gas flow
- 90: pneumatic component
- 91: supply port
- 92: discharge port
- 93: exhaust port
- 94: electronics portion
- 95: solenoid valve
- 96: electric interface
- 97: electric connection
- 98: further electric connection
- 99: circuit(s)
- 101: first fluid connection
- 102: second fluid connection
- 103: third fluid connection
- 104: control interface
- 105: control connection
- 106: pneumatic assembly
- 107: valve
- 110: pneumatic system for a vehicle
- 111: pressure gas source
- 112: air dryer
- 113: regeneration valve
- 114: pneumatic consumer system
- 115: control electronics
- 116: control valve
- 121: supply line
- 122: pneumatic consumer line
- 123: exhaust line
- 124: valve housing
- 125: electric connection
- 126: filter connection line
- 127: filter
- 130: vehicle
- 131: brake cylinder
- 132: wheel speed sensor
- 133: wheel
- 134.1: front axle
- 134.2: rear axle
- 135: control electronics
- 136: front axle modulator
- 137: rear axle modulator
- 138: control valve
- 139: pressure reservoir
- 141: electric line
- 142: electric interface
- 150: electropneumatic levelling system
- 151: chassis
- 152: cabin
- 153: adjustment member
- 153': further adjustment member
- 154: electropneumatic control device
- 155: solenoid valve(s)
- 156: supply port
- 158: discharge port(s)
- 159: pneumatic consumer lines
- 160: levelling adjustment path
- 170: electropneumatic shock absorbing system
- 173: pneumatic shock absorber
- 173': further pneumatic shock absorber
- 174: electropneumatic control device
- 175: solenoid valve(s)
- 176: supply port
- 178: discharge port(s)
- 179: pneumatic consumer lines
- 180: method
- 181, 182: process blocks
- 190: method
- 191, 192: process blocks

## Claims

1. A silencer fitting element (10) for a silencer (50) of a pneumatic component (90) or a pneumatic system (110; 150; 170) for a vehicle (130), the silencer fitting element (10) comprising:
a baffle plate (20) extending transverse to a center axis (11) of the silencer fitting element (10), the baffle plate (20) comprising a first baffle plate surface (21), a second baffle plate surface (22), and several gas passages (25, 26) extending between the first baffle plate surface (21) and the second baffle plate surface (22) through the baffle plate (20);
a gas guiding structure (13) extending from the baffle plate (20) and configured to guide gas exiting the several gas passages (25, 26) over a guiding distance (37, 47) from the second baffle plate surface (22), wherein the gas guiding structure (13) is configured such that the guiding distance (37, 47) is different for at least one first gas passage (25) of the several gas passages (25, 26) and at least one second gas passage (26) of the several gas passages (25, 26); and
a mounting structure (35) for mounting the silencer fitting element (10), wherein the mounting structure (35) comprises a thread (35).

2. The silencer fitting element (10) of claim 1, wherein the gas guiding structure (13) is configured such that the guiding distance (37, 47) for gas passing through the baffle plate (20) in a central region (27) around the center axis (11) is greater than the guiding distance (37, 47) for gas passing through the baffle plate (20) in an annular region (28) radially outward of the central region (27).

3. The silencer fitting element (10) of claim 1 or claim 2, wherein the gas guiding structure (13) comprises an outer tubular portion (30) and an inner tubular portion (40), wherein the outer tubular (30) portion extends circumferentially around part of the inner tubular portion (40).

4. The silencer fitting element (10) of claim 3, wherein at least part of the thread (35) is arranged on a surface (33) of the outer tubular portion (30).

5. The silencer fitting element (10) of claim 3 or claim 4, wherein at least part of the thread (35) is arranged on an outer surface (33) of the outer tubular portion (30).

6. The silencer fitting element (10) of claim 5, wherein the thread (35) extends along the outer surface (33) of the outer tubular portion (30) from a first axial thread end (35a) to a second axial thread end (35b), wherein the first axial thread end (35a) and the second axial thread end (35b) are arranged on opposite sides relative to an extension plane (12) along which the second baffle plate surface (22) extends.

7. The silencer fitting element (10) of any one of claims 3 to 6, wherein the inner tubular portion (40) extends by a first distance (47) from the second baffle plate surface (22), wherein the outer tubular portion (30) extends by a second distance (37) from the second baffle plate surface (22), and wherein the first distance (47) is greater than the second distance (37).

8. The silencer fitting element (10) of claim 7, wherein the silencer fitting element (10) is configured such that the first distance (47) divided by the second distance (37) is at least 1.05, at least 1.1, at least 1.15, or at least 1.18

9. The silencer fitting element (10) of any one of claims 3 to 8, wherein the silencer fitting element (10) is configured such that one, several, or all of the following apply:
the outer tubular portion (30) has an inner surface (34) which flares with increasing distance from the second baffle element surface (22);
the inner tubular portion (40) has a further inner surface (44) which flares with increasing distance from the second baffle element surface (22);
the inner tubular portion (40) has a further outer surface (43) which tapers with increasing distance from the second baffle element surface (22).

10. The silencer fitting element (10) of any one of the preceding claims, wherein the gas guiding structure (13) is symmetric relative to at least one symmetry plane (14) and/or wherein the gas guiding structure (13) is rotationally symmetric relative to the center axis (11).

11. A silencer (50) for a pneumatic component (90) for a vehicle (130) or a pneumatic system (110; 150; 170) for a vehicle (130), the silencer (50) comprising:
the silencer fitting element (10) of any one of the preceding claims;
a housing (61) comprising a further thread (65) configured for threaded engagement with the thread (35) of the silencer fitting element (10); and
a damping material (55), wherein the silencer fitting element (10) is configured to guide the gas passing through the several passages (25, 26) of the baffle plate (20) into the damping material (55).

12. A pneumatic component (90) for a vehicle or a pneumatic system (110; 150; 170) for a vehicle (130), comprising the silencer fitting element (10) of any one of claims 1 to 10 or the silencer (50) of claim 11.

13. A commercial vehicle, comprising the silencer fitting element (10) of any one of claims 1 to 10, the silencer (50) of claim 11, the pneumatic component (90) of claim 12 or the pneumatic system (110; 150; 170) of claim 12.

14. A method of exhausting gas from a pneumatic component (90) of a vehicle (130) or from a pneumatic system (110; 150; 170) of a vehicle, the method comprising: exhausting the gas through a silencer (50), the silencer (50) comprising a damping material (55) and a silencer fitting element (10) mounted by means of a threaded engagement of a thread (35) of the silencer fitting element (10) with a mating thread (65), the silencer fitting element (10) comprising a baffle plate (20) and a gas guiding structure (13) extending from the baffle plate (20), wherein the baffle plate (20) comprises several gas passages (25, 26) extending through the baffle plate (20), and wherein exhausting the gas comprises: guiding, by the gas guiding structure (13), the gas over a guiding distance (37, 47) into the damping material (55), wherein the guiding distance (37, 47) is different for at least one first gas passage (25) and at least one second gas passage (26) of the several gas passages (25, 26).

15. The method of claim 14, wherein the silencer fitting element (10) is the silencer fitting element (10) of any one of claims 1 to 10.
